(19) Europäisches Patentamt
European Patent Office
Office européen des brevets

(11) **EP 4 787 475 A1**

(12) **EUROPEAN PATENT APPLICATION**
published in accordance with Art. 153(4) EPC

(43) Date of publication:
**05.08.2026 Bulletin 2026/32**

(21) Application number: **24872362.9**

(22) Date of filing: **26.09.2024**

(51) International Patent Classification (IPC):
**H01M 4/38** (2006.01)    **H01M 4/36** (2006.01)
**H01M 4/587** (2010.01)

(52) Cooperative Patent Classification (CPC):
**H01M 4/36; H01M 4/38; H01M 4/587;** Y02E 60/10

(86) International application number:
**PCT/JP2024/034364**

(87) International publication number:
**WO 2025/070577 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **28.09.2023  JP 2023168033**

(71) Applicant: **Panasonic Energy Co., Ltd.
Moriguchi-shi, Osaka 570-8511 (JP)**

(72) Inventor: **KOIZUMI, Isao
kadoma-shi, Osaka 571-0057 (JP)**

(74) Representative: **Novagraaf International SA
Chemin de l'Echo 3
1213 Onex, Geneva (CH)**

(54)    **SECONDARY BATTERY**

(57)    A secondary battery includes a positive electrode, a negative electrode, and an electrolyte. The negative electrode contains a negative electrode active material, and the negative electrode active material contains a silicon-containing material, and a graphite material. The single particle fracture strength of the silicon-containing material is in a range of 50 MPa or more and less than 350 MPa, and the ratio Ss/Sg of the single particle fracture strength Ss of the silicon-containing material to the single particle fracture strength Sg of the graphite material is in the range of 2.5 or more and less than 60.

FIG. 1

**Description**

[Technical Field]

The present disclosure relates to a secondary battery.

[Background Art]

Silicon-containing materials, such as silicon (Si) and silicon oxides, are known as capable of absorbing more lithium ions per unit volume than carbon materials, such as graphite. Therefore, there has been proposed to use a silicon-containing material in the negative electrode of lithium-ion secondary batteries.

Patent Literature 1 proposes "a nonaqueous electrolyte secondary battery comprising: a positive electrode plate having a positive electrode mixture layer containing a positive electrode active material capable of absorbing and releasing lithium ions; a negative electrode plate having a negative electrode mixture layer containing a negative electrode active material capable of absorbing and releasing lithium ions; a separator; and a nonaqueous electrolyte, wherein the negative electrode active material is a mixture of a graphite material and a silicon oxide represented by $SiO_x$ where $0.5 \leq x < 1.6$, and a fracture strength ratio $Ss/Sg$ of a fracture strength $Ss$ of a single particle of the silicon oxide to a fracture strength $Sg$ of a single particle of the graphite material is 60 to 90."

[Citation List]

[Patent Literature]

Patent Literature 1: Japanese Laid-Open Patent Publication No. 2015-185407

[Summary of Invention]

[Technical Problem]

Patent Literature 1 proposes the use of a soft graphite material, in order to allow the stress of expansion and contraction of the $SiO_x$ to be absorbed by the graphite material. However, the soft graphite is crushed during charging, and much of the electrolyte is pushed out from the negative electrode. It is therefore difficult to retain sufficient electrolyte in the negative electrode. When the battery is discharged in a state where the electrolyte is not present sufficiently in the vicinity of the negative electrode active material, the interface resistance increases, and the load characteristics deteriorate. In the production process, too, when the graphite material is soft, it is rolled too much, and the ion conduction paths in the negative electrode are decreased. As a result, sufficient charge-discharge cycle characteristics are difficult to obtain.

There also has been attempted to adjust the hardness of the graphite material, to allow the stress of expansion and contraction of the silicon-containing material to be absorbed by the graphite material and thus to improve the cycle retention rate.

However, there is a limit in improving the cycle retention rate by adjusting the hardness of the graphite material. Silicon-containing materials having high hardness expand and contract considerably, and show a tendency that the higher the proportion of the silicon-containing material in the negative electrode active material is, the more hardly the cycle retention rate can be maintained high by simply adjusting the hardness of the graphite material. On the other hand, silicon-containing materials having low hardness are prone to cracking during the rolling process when manufacturing the electrode and during charging and discharging, and the cycle retention rate tends to decrease.

[Solution to Problem]

One aspect of the present disclosure relates to a secondary battery, including: a positive electrode; a negative electrode; and an electrolyte, wherein the negative electrode contains a negative electrode active material, the negative electrode active material contains a silicon-containing material, and a graphite material, a single particle fracture strength of the silicon-containing material is in a range of 50 MPa or more and less than 350 MPa, and a ratio $Ss/Sg$ of the single particle fracture strength $Ss$ of the silicon-containing material to a single particle fracture strength $Sg$ of the graphite material is in the range of 2.5 or more and less than 60.

[Advantageous Effects of Invention]

According to the present disclosure, it is possible to obtain a secondary battery whose capacity retention rate in charge-discharge cycles is high.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawing]

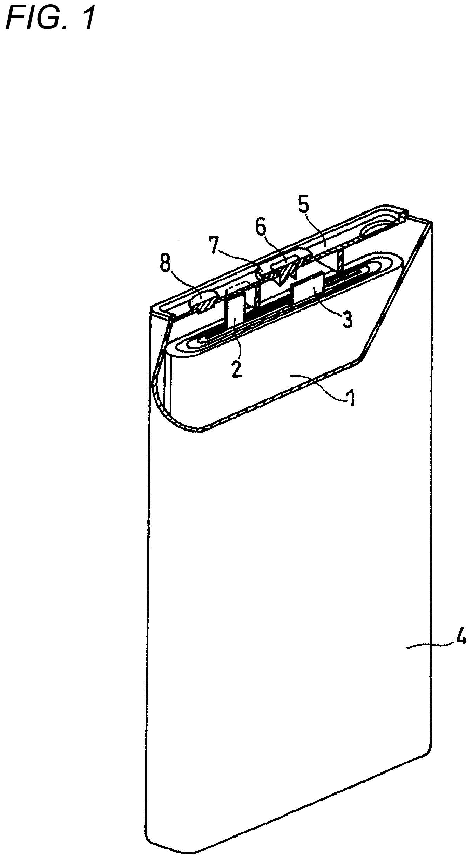

[FIG. 1] A partially cut-away schematic oblique view of a secondary battery according to one embodiment of the present invention.

[Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

In the following description, the term "comprise" or "include" is an expression including meanings of "comprise (or include)," "essentially consist of," and "consist of."

Secondary batteries include at least nonaqueous electrolyte secondary batteries, such as lithium-ion batteries and lithium-metal secondary batteries.

A secondary battery according to one embodiment of the present disclosure includes a positive electrode, a negative electrode, and an electrolyte. The negative electrode contains a negative electrode active material, and the negative electrode active material contains a silicon-containing material and a graphite material.

The single particle fracture strength Ss of the silicon-containing material and the single particle fracture strength Sg of the graphite material satisfy the following conditions.

(i) The single particle fracture strength Ss of the silicon-containing material is in the range of 50 MPa or more and less than 350 MPa. The single particle fracture strength Ss of the silicon-containing material may be in the range of 100 MPa or more and less than 350 MPa, and may be in the range of 100 MPa or more and 300 MPa or less.

(ii) The ratio Ss/Sg of the single particle fracture strength Ss of the silicon-containing material to the single particle fracture strength Sg of the graphite material is in the range of 2.5 or more and less than 60. The ratio Ss/Sg may be in the range of 8.8 or more and less than 60, may be in the range of 8.8 or more and 35 or less, and may be in the range of 10 or more and 35 or less.

The present inventor has found that when the single particle fracture strengths of the silicon-containing material and the graphite material satisfy the above conditions (i) and (ii), a high cycle retention rate can be maintained. This tendency is noticeable when the content ratio of the silicon-containing material in the negative electrode active material is large. The present invention is based on the above finding.

Particles of the silicon-containing material with a single particle fracture strength Ss of less than 350 MPa have a low density, and include large amount of voids within the particles. The internal voids absorb the expansion and contraction of the silicon-containing particles that occur in association with charging and discharging. Therefore, the displacement amount during expansion and contraction is small, and a high cycle retention rate can be easily obtained. Furthermore, by setting the ratio Ss/Sg to 2.5 or more, the silicon-containing material can have a sufficiently high hardness as compared to the graphite material, and the silicon-containing material becomes less likely to crack under stress during the rolling process when manufacturing the electrode and during charging and discharging. However, as the Ss/Sg ratio is set hither, the difference in hardness between the silicon-containing material and the graphite material increases, and in association with crushing of the soft graphite during charging, much of the electrolyte tends to be pushed out from the negative electrode. By setting the ratio Ss/Sg to 60 or less, the electrolyte can be sufficiently retained in the negative electrode, and the decrease of the cycle retention rate can be suppressed.

The density of the particles of the silicon-containing material is, for example, in the range of 1.6 to 2.1 g/cm$^3$, and may be in the range of 1.6 to 1.9 g/cm$^3$. The density of the particles of the silicon-containing material can be measured using a pycnometer using helium gas.

The single particle fracture strength Sg of the graphite material may be any value as long as it satisfies the above conditions (i) and (ii), and may be in the range of 10 MPa or more and 40 MPa or less.

The total mass ratio of the silicon-containing material and the graphite material, relative to the mass of the whole negative electrode active material may be 60 mass% or more, 70 mass% or more, 80 mass% or more, or 90 mass% or more, and may be 100 mass% or less.

The mass ratio of the silicon-containing material, relative to the total mass of the graphite material and the silicon-containing material may be 3 mass% or more and 98 mass% or less. More preferably, the content ratio of the silicon-containing material relative to the total of the silicon-containing material and the graphite material in the negative electrode active material may be 6 mass% or more and 95 mass% or less. Within such a range, the expansion and contraction of the negative electrode as a whole can be controlled in the more suitable range, and the merits of the high capacity imparted by the silicon-containing material can be maximized.

The content ratio of the silicon-containing material relative to the total of the silicon-containing material and the graphite material in the negative electrode active material may be estimated, with the ratio between the area of the silicon-containing material and the area of the graphite material in a cross section of the negative electrode regarded as a volume ratio therebetween, from the ratio between these areas and the specific gravities of the silicon-containing material and the graphite material. For example, a secondary battery is disassembled to take out the negative electrode, and the negative electrode is washed with anhydrous ethyl methyl carbonate or dimethyl carbonate. The negative electrode is cut perpendicular to the surface of the negative electrode current collector, and the cross section of the negative electrode mixture layer is polished by ion milling. The backscattered electron image of the cross section is observed with a scanning electron microscope (SEM), to calculate the area of the silicon-containing material and the area of the graphite material observed in the cross section. The silicon-containing material and the graphite material can be distinguished because they have different brightness in the backscattered electron image.

(Silicon-containing material)

The silicon-containing material means a silicon alloy, a silicon compound, a composite material containing silicon, and the like. The composite material containing silicon may have a so-called sea-island structure, and the silicon phases may constitute islands. The composite material containing silicon may be composite particles each including an ion-conducting phase and silicon phases (in one aspect, silicon particles) dispersed in the ion-conducting phase. The ion-conducting phase is a phase that conducts ions. The ion-conducting phase may be at least one selected from the group consisting of a silicate phase, a carbon phase, and a silicon oxide phase. These materials are particulate and available by various methods.

In particular, a composite material including a carbon phase and silicon phases dispersed in the carbon phase is flexible and highly conductive, and can maintain a favorable conductive network within the negative electrode even when the graphite material cannot sufficiently absorb stress. Specifically, even when voids are formed around the silicon-containing material or cracking occurs in the silicon-containing material, partial isolation of the silicon-containing material is unlikely to occur, and the contacts between the silicon-containing material and its surroundings are likely to be maintained. Therefore, the decrease in capacity during repeated charge-discharge cycles can be easily suppressed. Furthermore, the expansion of the negative electrode hardly occurs.

The hardness of the silicon-containing material depends primarily on the hardness of the ion-conducting phase. The greater the porosity and the lower the density of the ion-conducting phase are, the lower the hardness and also the smaller the single particle fracture strength Ss of the silicon-containing material are. The silicon-containing material with a single particle fracture strength Ss of less than 350 MPa has a sufficiently low particle density and many fine voids (pores) within its particles. Therefore, the expansion and contraction of the silicon phases during charging and discharging are relaxed through the voids, and a high cycle retention rate can be easily obtained.

The composite material including a carbon phase and silicon phases dispersed in the carbon phase can be present in the form of particles having a sea-island structure. The silicon phases (islands) are dispersed in a matrix (sea) of the carbon phase and are covered with a carbon phase. In the sea-island structure, contacts between the silicon phases and the electrolyte are restricted, leading to suppressed side reactions. In addition, the stress generated along with expansion and contraction of the silicon phases are relaxed by the matrix of the carbon phase.

The carbon phase, which is an ion-conducting phase, may be composed not of a material with a developed graphite-like crystal structure like a graphite material, but of, for example, amorphous carbon (formless carbon). Examples of the amorphous carbon constituting the carbon phase include hard carbon, soft carbon, and other amorphous carbon. Amorphous carbon is a carbon material in which the average interplanar spacing d002 of the (002) plane measured by X-ray diffractometry exceeds 0.34 nm.

The average particle diameter of the silicon phases dispersed in the carbon phase may be 1 nm or more, or 5 nm or more. The above average particle diameter may be 1000 nm or less, 500 nm or less, 200 nm or less, 100 nm or less, or 50 nm or less. Fine silicon phases are preferable in that their volume change during charging and discharging is small, leading to improved structural stability of the silicon-containing material.

The average particle diameter of the silicon phases can be measured by observing a cross section of the particles of the Si-containing material with a SEM (scanning electron microscope) or a TEM (transmission electron microscope). Specifically, it can be determined by averaging the maximum diameters of randomly selected 100 particulate silicon phases.

The crystallite size of the silicon phase is preferably 30 nm or less. When the crystallite size is 30 nm or less, the amount of volume change of the silicon-containing material due to the expansion and contraction of the silicon phases during charging and discharging can be further reduced. The crystallite size is more preferably 30 nm or less, even more preferably 20 nm or less. When the crystallite size is 20 nm or less, the expansion and contraction of the silicon phases are balanced, and the occurrence of microcracks in the silicon phase is reduced, leading to further improved cycle characteristics.

The crystallite size of the silicon phase is calculated using the Scherrer's formula from the half-value width of a diffraction peak belonging to the (111) plane of the silicon phase (simple substance Si) in an X-ray diffraction pattern.

The content ratio of the silicon phases in the silicon-containing material may be, for example, 30 mass% or more, 40 mass% or more, or 50 mass% or more, and may be 80 mass% or less, or 70 mass% or less. Within this range, a sufficiently high capacity of the negative electrode can be achieved, and the cycle characteristics can also be easily improved. In addition, a considerable proportion of the carbon phase is maintained, so that the carbon phase can easily enter into the voids which will be generated in a later stage in association with charging and discharging, making it easy, for example, to maintain the electrical connection between the silicon-containing material and its surroundings.

The average particle diameter of the silicon-containing material may be 1 $\mu$m or more, or 5 $\mu$m or more, and may be 20 $\mu$m or less, 15 $\mu$m or less, or 10 $\mu$m or less. The average particle diameter D50 of the silicon-containing material may be a median diameter (diameter at 50% cumulative volume) in a volume-based particle size distribution measured with a laser diffraction-scattering type particle size distribution analyzer.

(Graphite material)

The graphite material means a material with a developed graphite-like crystal structure, and in general, refers to a carbon material in which the interplanar spacing d002 of the (002) plane measured by an X-ray diffractometry is 0.34 nm or less. For example, natural graphite, artificial graphite, graphitized mesophase carbon particles, and the like are typical graphite materials. The graphite material is particulate, and those with various average particle diameters and average circularities are commercially available.

The average particle diameter of the graphite material may be 5 $\mu$m or more, or 10 $\mu$m or more, and may be 50 $\mu$m or less, or 30 $\mu$m or less. The average particle diameter D50 of the graphite material may be a median diameter (diameter at 50% cumulative volume) in a volume-based particle size distribution measured with a laser diffraction-scattering type particle size distribution analyzer.

In one example of the negative electrode, the average particle diameter of the graphite material is in a range of 10 to 30 $\mu$m, and the average particle diameter of the silicon-containing material is in a range of 1 to 15 $\mu$m. With this configuration, the charge-discharge cycle characteristics become particularly favorable.

In one example of the negative electrode, the value of (average particle diameter of silicon-containing material) / (average particle diameter of graphite material) is less than 1, which may be 0.8 or less, 0.6 or less, or 0.5 or less. The lower limit of this value is not particularly limited, and may be 0.05 or more, 0.1 or more, or 0.2 or more. By setting this value to 0.5 or less, the charge-discharge cycle characteristics become particularly favorable.

The negative electrode active material may contain, in addition to the graphite material, a carbon material such as hard carbon and soft carbon. Hard carbon is a carbon material in which minute graphite crystals are arranged in random directions, and almost no further graphitization proceeds. The average interplanar spacing d002 of the 002 plane thereof is greater than 0.38 nm. Hard carbon has low resistance and is preferable in terms of its high capacity. However, a graphite material is most preferable in terms of its high capacity and small irreversible capacity.

The mass ratio of the carbon material other than the graphite material to the mass of the graphite material contained in the negative electrode active material is desirably 30 mass% or less, and desirably 20 mass% or less or 10 mass% or less.

(Single particle fracture strength)

Here, the single particle fracture strength Ss of the silicon-containing material is in a range of 50 to 350 MPa. The single particle fracture strength of the silicon-containing material may be in a range of 100 to 350 MPa. The single particle fracture strength within such a range can be said to be considerably small for a silicon-containing material. The silicon-containing material having a single particle fracture strength within such a range has a tendency that its expansion and contraction during charging and discharging are small. Even in the case where its expansion and contraction are large, through the deformation of itself, the stress can be relaxed to some extent. Therefore, excellent charge-discharge cycle characteristics are likely to be obtained.

The silicon-containing material having a single particle fracture strength Ss of less than 350 MPa, when used in combination with a graphite material such that the belowdescribed ratio Ss/Sg to the single particle fracture strength Sg of the graphite material is 2.5 or more, can maintain excellent charge-discharge cycle characteristics. However, if the ratio Ss/Sg exceeds 60, the difference in hardness between the silicon-containing material and the graphite material increases, and the silicon-containing material tends to crack under stress. Moreover, the graphite is excessively compressed in the negative electrode production process, and the space that can retain the electrolyte within the negative electrode is reduced. As a result, the ion conduction pathways in the negative electrode are decreased, and the charge-discharge cycle characteristics under high loads tend to deteriorate. Therefore, by setting the ratio Ss/Sg to 2.5 or more and 60 or less, excellent charge-discharge cycle characteristics can be realized. In addition, the phenomenon in which the graphite material is crushed during charging, causing much of the electrolyte to be pushed out from the negative electrode, and the phenomenon in which the graphite material is rolled too much during the production process are suppressed. As a result, not only the charge-discharge cycle characteristics of the secondary battery but also its load characteristics become favorable.

The method for controlling the single particle fracture strength Ss of the silicon-containing material is not particularly limited. For example, the single particle fracture strength may be controlled to be a target value by a manufacturing method of a silicon-containing material. Such a method includes, for example, a selection of a material that constitutes the ion-conductive phase, and a method of applying pressure, under heating, to the silicon-containing material before pulverization. The heating temperature may be, for example, 300 °C to 800 °C. For example, in the case where the material used for forming the ion-conductive phase contains a substance that is removed by heating, the greater the amount of the substance removed by heating is, the more voids the formed ion-conductive phase has, resulting in a lower density and a lower single particle fracture strength Ss.

The single particle fracture strength Sg of the graphite material may be any value as long as the Ss and the ratio Ss/Sg satisfy the above-mentioned conditions, and may be, for example, in the range of 10 to 40 MPa. The single particle fracture strength Sg of the graphite material may be in the range of 12 to 20 MPa. When the single particle fracture strength of the graphite material is less than 10 MPa, the graphite material is rolled during the production process, and the ionic conduction paths in the negative electrode are decreased, tending to cause the charge-discharge cycle characteristics under high loads to deteriorate. When the single particle fracture strength of the graphite material exceeds 40 MPa, the residual stress during rolling increases, and the internal pressure of the electrode group significantly increases due to expansion of the negative electrode, tending to cause the nonaqueous electrolyte to be pushed out from the electrode group.

The method for controlling the single particle fracture strength Sg of the graphite material is also not particularly limited. An exemplary method is to apply a pressure to the graphite material. Such a method may be, for example, a cold isostatic pressing processing. The number of times of processing may be adjusted to control the single particle fracture strength to a target value. The single particle fracture strength may be controlled by processing the particle shape of the graphite material.

The single particle fracture strength of each of the graphite material and the silicon-containing material can be measured using a commercially available measuring device (e.g., Micro Compression Tester (MCT-W201) available from Shimadzu Corporation) by the following procedure.

(1) A graphite material or a silicon-containing material is spread over a lower pressing plate (SKS flat plate) of the measuring device.
(2) A particle with a size close to the average particle diameter D50 of the graphite material or the average particle diameter D50 of the silicon-containing material is selected as a sample, with an optical microscope.
(3) A diamond flat indenter with a diameter of 50 $\mu$m is used as an upper pressing indenter, so that only a single particle selected as the sample is present between the upper pressing bar and the lower pressing plate.
(4) The upper pressing bar is lowered slowly, and from when it comes in contact with the sample (the lowering speed changes), a load is applied to the sample at a constant acceleration (specifically, a displacement rate 2.7 mN/sec).
(5) The relationship between the load and the amount of deformation of the sample is measured, and the point where the amount of deformation of the sample changes abruptly (the inflection point of the load-deformation profile) is taken as a breaking point. From the load and the particle diameter at that point, the fracture strength is calculated based on the following equation. The fracture strength is calculated by averaging values obtained from five measurements.

$$St = 2.8\ P/\pi d^2$$

St: fracture strength [MPa or N/mm$^2$]
P: load [N]
d: particle diameter [mm]

The sample of the graphite material desirably has a maximum diameter of $\pm 5\%$ of the average particle diameter D50 of the graphite material. The sample of the silicon-containing material desirably has a maximum diameter of $\pm 5\%$ of the average particle diameter D50 of the silicon-containing material. The degree of sphericity of each sample is preferably 85% or more. The degree of sphericity may be calculated as a diameter of a circle having the same area as that in the TEM or SEM image.

The graphite material and the silicon-containing material as objects to be measured may be prepared by disassembling a secondary battery to take out the negative electrode, peeling off the negative electrode mixture from the negative electrode, washing the negative electrode mixture with anhydrous ethyl methyl carbonate or dimethyl carbonate, grinding the negative electrode mixture in a mortar, and separating the components by centrifugation or other methods. The ground sample of the negative electrode mixture is dried for 1 hour in a dry atmosphere, and immersed in weakly boiled 6M hydrochloric acid for 10 minutes. Then, the sample is washed with ion-exchanged water, and after filtration, dried at 200 °C for 1 hour. Thereafter, centrifugation or the like may be performed.

Next, with regard to a method for producing a silicon-containing material, two methods will be described as examples.

(a) First method

Raw material silicon and a carbon source are mixed together, and using a pulverizer like a ball mill, the mixture of raw material silicon and a carbon source, while being micronized, is pulverized and formed into a composite. The mixture may be added with an organic solvent. At this time, the raw material silicon is finely pulverized, into silicon phases. The silicon phases are dispersed in a matrix of the carbon source.

Examples of the carbon source that can be used include water-soluble resins, such as carboxymethyl cellulose (CMC), hydroxyethyl cellulose, polyacrylates, polyacrylamide, polyvinyl alcohol, polyethylene oxide, and polyvinylpyrrolidone, saccharides, such as cellulose and sucrose, petroleum pitch, coal pitch, and tar, but are not limited thereto.

Examples of the organic solvent that can be used include alcohols, ethers, fatty acids, alkanes, cycloalkanes, silicate esters, and metal alkoxides.

Next, the composite of the silicon phases and the carbon source is heated to 700 °C to 1200 °C in an inert gas atmosphere (e.g., an atmosphere of argon, nitrogen, etc.) to carbonize the carbon source, into amorphous carbon. In this way, a silicon-containing material in which silicon phases are dispersed in a carbon phase containing amorphous carbon can be obtained.

(b) Second method

Raw material silicon and a carbon material are mixed together, and using a pulverizer like a ball mill, the mixture of raw material silicon and a carbon material, while being micronized, is pulverized and formed into a composite. The mixture may be added with an organic solvent. At this time, the raw material silicon is finely pulverized, into silicon phases. The silicon phases are dispersed in a matrix of the carbon material.

By forming raw material silicon and a carbon material into a composite as described above, a silicon-containing material in which the silicon phases are dispersed in the carbon phase of amorphous carbon is obtained. Thereafter, the silicon-containing material may be heated to 700 °C to 1200 °C in an inert gas atmosphere.

As the carbon material, amorphous carbon is preferred, and graphitizable carbon (soft carbon), non-graphitizable carbon (hard carbon), carbon black, and the like can be used. Examples of the carbon black include acetylene black and Ketjen black. Even when graphite is used as the carbon material, in the process of obtaining the composite of second silicon and a carbon material using a pulverizer, a majority of the graphite crystal structure is lost, and a carbon phase of amorphous carbon is formed.

(Example of configuration of secondary battery)

An example of the configuration of a secondary battery according to the present disclosure will be described below. Except for using the above-described negative electrode active material as a negative electrode active material, with respect to other components, various selections are possible. For example, for components other than the negative electrode active material, known components may be used. A secondary battery according to the present disclosure usually includes a positive electrode, a negative electrode, an electrolyte, and a separator disposed between the positive electrode and the negative electrode. Description of these components will be given below.

[Negative electrode]

The negative electrode includes, for example, a negative electrode current collector, and a negative electrode mixture layer formed on a surface of the negative electrode current collector and containing the negative electrode active material. The negative electrode mixture layer can be formed by applying a negative electrode slurry of a negative electrode mixture dispersed in a dispersion medium onto a surface of the negative electrode current collector, followed by drying. The applied film after drying may be rolled, if necessary.

The negative electrode mixture contains the negative electrode active material as an essential component, and can contain a binder, a conductive agent, a thickener, and the like, as optional components. The negative electrode active material includes a carbon material and a silicon-containing material.

Examples of the negative electrode current collector include a non-porous conductive substrate (e.g., metal foil) and a porous conductive substrate (e.g., mesh, net, punched sheet). Examples of the material of the negative electrode current collector include stainless steel, nickel, nickel alloy, copper, and copper alloy.

Examples of the binder include fluorocarbon resin, polyolefin resin, polyamide resin, polyimide resin, vinyl resin, styrene-butadiene copolymer rubber (SBR), polyacrylic acid and derivatives thereof. These may be used singly or in combination of two or more kinds.

Examples of the conductive agent include carbon black, conductive fibers, fluorinated carbon, and organic conductive materials. These may be used singly or in combination of two or more kinds.

Examples of the thickener include carboxymethyl cellulose (CMC), and polyvinyl alcohol. These may be used singly or in combination of two or more kinds.

Examples of the dispersion medium include water, alcohols, ethers, N-methyl-2-pyrrolidone (NMP), and mixed solvents of these.

[Positive electrode]

The positive electrode includes, for example, a positive electrode current collector, and a positive electrode mixture layer formed on a surface of the positive electrode current collector. The positive electrode mixture layer can be formed by applying a positive electrode slurry of a positive electrode mixture dispersed in a dispersion medium onto a surface of the positive electrode current collector, followed by drying. The applied film after drying may be rolled, if necessary.

The positive electrode mixture includes a positive electrode active material as an essential component, and may further include a binder, a conductive agent, and the like, as optional components.

As the positive electrode active material, a material that absorbs and releases lithium ions can be used. As the positive electrode active material, a known positive electrode active material used in nonaqueous electrolyte secondary batteries may be used. Examples of the positive electrode active material include a lithium composite metal oxides. Examples of the lithium composite metal oxides include $Li_aCoO_2$, $Li_aNiO_2$, $Li_aMnO_2$, $Li_aCo_bNi_{1-b}O_2$, $Li_aCo_bM_{1-b}O_c$, $Li_aNi_{1-b}M_bO_c$, $Li_aMn_2O_4$, $Li_aMn_{2-b}M_bO_4$, $LiMePO_4$, $Li_2MePO_4F$. Here, M represents at least one selected from Na, Mg, Sc, Y, Mn, Fe, Co, Ni, Cu, Zn, Al, Cr, Pb, Sb, and B. Me includes at least transition element (e.g., at least one selected from the group consisting of Mn, Fe, Co, and Ni). Here, $0 \leq a \leq 1.2$, $0 \leq b \leq 0.9$, and $2.0 \leq c \leq 2.3$. The value "a" representing the molar ratio of lithium is a value immediately after the preparation of the active material and is subjected to increase and decrease during charging and discharging.

Examples of the binder and the conductive agent may be like those exemplified for the negative electrode. Additional examples of the conductive agent include graphite, such as natural graphite and artificial graphite.

For the positive electrode current collector, a conductive substrate having a shape similar to that described for the negative electrode current collector can be used. Examples of the material of the positive electrode current collector include stainless steel, aluminum, aluminum alloy, and titanium.

[Electrolyte]

The electrolyte (electrolyte solution) contains a solvent and a lithium salt dissolved in the solvent. The concentration of the lithium salt in the electrolyte is, for example, 0.5 mol/L to 2 mol/L. The electrolyte may contain a known additive.

The solvent may be aqueous or nonaqueous. The nonaqueous solvent may be, for example, a cyclic carbonic acid ester, a chain carbonic acid ester, or a cyclic carboxylic acid ester. Examples of the cyclic carbonic acid ester include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include $\gamma$-butyrolactone (GBL) and $\gamma$-valerolactone (GVL). The nonaqueous solvent may be used singly, or in combination of two or more kinds.

Examples of the lithium salt include a lithium salt of a chlorine-containing acid (e.g., $LiClO_4$, $LiAlCl_4$, $LiB_{10}Cl_{10}$), a lithium salt of a fluorine-containing acid (e.g., $LiPF_6$, $LiBF_4$, $LiSbF_6$, $LiAsF_6$, $LiCF_3SO_3$, $LiCF_3CO_2$), a lithium salt of a fluorine-containing acid imide (e.g., $LiN(CF_3SO_2)_2$, $LiN(CF_3SO_2)(C_4F_9SO_2)$, $LiN(C_2F_5SO_2)_2$), and a lithium halide (e.g., LiCl, LiBr, LiI). The lithium salt may be used singly or in combination of two or more kinds.

The electrolyte may contain, for example, 1 mass% to 5 mass% of vinylene carbonate (VC). The electrolyte may contain, for example, 0.5 mass% to 5 mass% of fluoroethylene carbonate (FEC).

The secondary battery of the present embodiment may be a nonaqueous electrolyte secondary battery using a nonaqueous electrolyte. The nonaqueous electrolyte can be obtained by, for example, dissolving a lithium salt in a nonaqueous solvent.

[Separator]

It is desirable to interpose a separator between the positive electrode and the negative electrode. The separator is excellent in ion permeability and has moderate mechanical strength and electrically insulating properties. As the separator, for example, a microporous thin film, a woven fabric, a nonwoven fabric, and the like can be used. As the material of the separator, polyolefin, such as polypropylene and polyethylene, can be used.

An example of the secondary battery includes an electrode group, an electrolyte, and an outer body housing them. The electrode group may be a wound electrode group in which a positive electrode and a negative electrode are wound with a separator interposed therebetween. The electrode group may be in another form. For example, the electrode group may be a stacked electrode group in which a positive electrode and a negative electrode are stacked with a separator interposed therebetween. The secondary battery may be of any form, and may be, for example, of a form of cylindrical type, square type, coin type, button type, laminated type, or the like.

FIG. 1 is a partially cut-away schematic oblique view of a secondary battery according to one embodiment of the present disclosure. Note that the battery shown in FIG. 1 is an example, and the secondary battery of the present disclosure is not limited to the battery shown in FIG. 1.

The battery includes a bottomed rectangular battery case 4, an electrode group 1 and an electrolyte (not shown) housed in the battery case 4, and a sealing plate 5 sealing the opening of the battery case 4. The electrode group 1 includes a long belt-shaped negative electrode, a long belt-shaped positive electrode, and a separator interposed therebetween. The sealing plate 5 includes a liquid injection port closed with a sealing plug 8 and a negative electrode terminal 6 insulated from the sealing plate 5 via a gasket 7.

To the negative electrode current collector, one end of a negative electrode lead 3 is attached by welding or the like. To the positive electrode current collector, one end of a positive electrode lead 2 is attached by welding or the like. The other end of the negative electrode lead 3 is electrically connected to the negative electrode terminal 6. The other end of the positive electrode lead 2 is electrically connected to the sealing plate 5.

[Examples]

In the following, the present disclosure will be specifically described with reference to Examples and Comparative Examples. The present disclosure, however, is not limited to the following Examples. A plurality of secondary batteries were fabricated in the following manner.

<<Examples 1 to 4, Comparative Examples 1 to 5>>

[Preparation of silicon-containing material]

Coal pitch serving as a carbon source, and raw material silicon (purity 99.9% or more, average particle diameter 100 nm) were mixed and stirred in a ball mill while the temperature was controlled to be equal to or lower than the softening temperature of the pitch. Thereafter, the stirrer was replaced with a bead mill, and mixing was continued while the temperature was held to be equal to or higher than the softening temperature of the pitch. The resultant liquid mixture was extruded out of a slit to be like a sheet of 4 mm thick. The extruded sheet was heated to 800 °C in a nitrogen atmosphere furnace, and pressed as it is at a predetermined pressure with a pair of rollers heated to 550 °C. The pressed sheet was crushed with a jaw crusher, and further pulverized with a jet mill to have an average particle diameter of 6 $\mu$m, to obtain particles (particles P1) of silicon-containing material having a target single particle fracture strength Ss.

The single particle fracture strength Ss of the particles P1 was adjusted to a target value by adjusting the ratio of the fixed carbon amount contained in the coal pitch. The smaller the fixed carbon amount contained in the pitch is, the larger the amount of the component to volatilize when heated and carbonized is. Thus, the internal void amount is increased, resulting in a low density, and a low single particle fracture strength Ss.

The composition of the particles P1 was analyzed by ICP (inductively coupled plasma atomic emission spectroscopy). The result found that the silicon element content was 50.1 mass%.

[Preparation of graphite material]

Natural graphite was subjected to cold isostatic pressing processing a predetermined number of times, to obtain a graphite material having a target single particle fracture strength Sg. The graphite material was pulverized with a jet mill, to obtain particles (particles P2) having an average particle diameter of 20 $\mu$m.

[Production of negative electrode]

The particles P1 and P2 were mixed in a mass ratio of P1:P2 = 10:90, to obtain a negative electrode active material. The negative electrode active material was mixed with sodium carboxymethyl cellulose (CMC), polyacrylic acid (PAA), and styrene-butadiene rubber (SBR) in a mass ratio of negative electrode active material : CMC : PAA : SBR = 97:1:1:1, to obtain a negative electrode mixture. After water was added thereto, the negative electrode mixture was stirred using a mixer, to prepare a negative electrode slurry. The negative electrode slurry was applied onto a surface of a copper foil serving as a negative electrode current collector, to form an applied film. The applied film was dried and then rolled, to obtain a negative electrode with a negative electrode mixture layer formed on each of both sides of the copper foil.

[Production of positive electrode]

Lithium-nickel composite oxide ($LiNi_{0.88}Co_{0.09}Al_{0.03}O_2$), acetylene black, and polyvinylidene fluoride were mixed in a mass ratio of lithium-nickel composite oxide: acetylene black : polyvinylidene fluoride = 100:1:0.9, to obtain a mixture. After N-methyl-2-pyrrolidone (NMP) was added thereto, the resultant mixture was stirred using a mixer, to prepare a positive electrode slurry. The positive electrode slurry was applied onto a surface of an aluminum foil serving as a positive electrode current collector, to form an applied film. The applied film was dried and then rolled, to obtain a positive electrode with a positive electrode mixture layer formed on each of both sides of the aluminum foil.

[Preparation of nonaqueous electrolyte]

$LiPF_6$ was dissolved in a nonaqueous solvent, to prepare a nonaqueous electrolyte. The nonaqueous solvent used here was a mixed solvent of ethylene carbonate (EC) and ethyl methyl carbonate (EMC) in a volume ratio of EC:EMC = 30:70. The concentration of $LiPF_6$ in the nonaqueous electrolyte was 1.0 mol/L. Vinylene carbonate (VC) was dissolved in the nonaqueous electrolyte so as to be contained at a ratio of 2.0 mass%.

[Fabrication of secondary battery]

With a tab attached to each electrode, the positive electrode and the negative electrode were wound spirally with the separator interposed therebetween, to form an electrode group. The tab was positioned at the outermost layer. The electrode group was inserted into an outer body made of aluminum laminated film and dried under vacuum at 105 °C for two hours. Next, the nonaqueous electrolyte was injected into the outer body, and the opening of the outer body was sealed, to obtain a battery.

[Evaluation]

[Charge-discharge cycle test]

Each battery was constant-current charged at a current of 0.5It until the voltage reached 4.2 V, and then, constant-voltage charged at a constant voltage of 4.2 V until the current reached 1/20It. Next, a constant-current discharging was performed at a current of 0.5It until the voltage reached 2.5 V. With a rest period between charging and discharging set to 10 minutes, the charge-discharge cycle was performed 200 cycles, to calculate a capacity retention rate R shown by the following equation.

Capacity retention rate R (%) = (discharge capacity at 1st cycle / discharge capacity at 200th cycle) $\times$ 100

Note that (1/X)It represents a current. (1/X)It (A) = rated capacity (Ah) / X(h). X represents the time required to charge or discharge electricity equivalent to the rated capacity. For example, 0.5It means that X = 2 and the current value is the rated capacity (Ah) / 2 (h).

The results are shown in Table 1, with the batteries of Examples denoted by A1 to A4, and the batteries of Comparative Examples denoted by B1 to B5.

[Table 1]

|  | Ss (Mpa) | Sg (Mpa) | Ss/Sg | capacity retention rate R (%) |
|---|---|---|---|---|
| Ex. 1 | 350 | 10 | 35 | 91 |
| Ex. 2 | 100 | 10 | 10 | 89 |
| Ex. 3 | 350 | 40 | 8.8 | 89 |
| Ex. 4 | 100 | 40 | 2.5 | 88 |
| Com. Ex. 1 | 490 | 10 | 49 | 84 |
| Com. Ex. 2 | 490 | 40 | 12.3 | 82 |
| Com. Ex. 3 | 490 | 14 | 35 | 84 |
| Com. Ex. 4 | 80 | 40 | 2.0 | 75 |
| Com. Ex. 5 | 660 | 10 | 66 | 71 |

Table 1 shows that in Examples 1 to 4, in which the single particle fracture strength Ss of the silicon-containing material was in the range of 50 MPa or more and less than 350 MPa, and the ratio Ss/Sg of the single particle fracture strength Ss of the silicon-containing material to the single particle fracture strength Sg of the graphite material was in the range of 2.5 or more and less than 60, the capacity retention rate R was 88% or more, demonstrating excellent charge-discharge cycle characteristics. On the other hand, in Comparative Examples 1 to 3, in which the single particle fracture strength Ss of the silicon-containing material exceeded 350 MPa, and Comparative Example 4, in which the ratio Ss/Sg was less than 2.5, the capacity retention rate R was low.

The ratio Ss/Sg is preferably 2.5 or more and less than 60, in terms of suppressing the silicon-containing material from cracking under stress during the rolling process when manufacturing the electrode and during charging and discharging, and in terms of suppressing the graphite from being excessively compressed after the rolling process and the electrolyte from being pushed out from the negative electrolyte.

<<Supplementary notes>>

The above description of embodiments discloses the following techniques.

(Technique 1)

A secondary battery, comprising:

a positive electrode; a negative electrode; and an electrolyte, wherein
the negative electrode contains a negative electrode active material,
the negative electrode active material contains a silicon-containing material, and a graphite material,
a single particle fracture strength of the silicon-containing material is in a range of 50 MPa or more and less than 350 MPa, and
a ratio Ss/Sg of the single particle fracture strength Ss of the silicon-containing material to a single particle fracture strength Sg of the graphite material is in the range of 2.5 or more and less than 60.

(Technique 2)

The secondary battery according to technique 1, wherein the single particle fracture strength of the graphite material is in a range of 100 MPa or more and less than 350 MPa.

(Technique 3)

The secondary battery according to technique 1 or 2, wherein the single particle fracture strength of the silicon-containing material is in a range of 10 MPa or more and 40 MPa or less.

(Technique 4)

The secondary battery according to any one of techniques 1 to 3, wherein the silicon-containing material is a composite material including a carbon phase, and silicon phases dispersed in the carbon phase.

(Technique 5)

The secondary battery according to any one of techniques 1 to 4, wherein a mass ratio of the silicon-containing material to a total mass of the silicon-containing material and the graphite material in the negative electrode active material is 6 mass% or more and 95 mass% or less.

[Industrial Applicability]

The present disclosure is applicable to secondary batteries, and is useful, for example, as a main power source for mobile communication devices, portable electronic devices, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

1: electrode group, 2: positive electrode lead, 3: negative electrode lead, 4: battery case, 5: sealing plate, 6: negative electrode terminal, 7: gasket, 8: sealing plug

**Claims**

1. A secondary battery, comprising:

    a positive electrode; a negative electrode; and an electrolyte, wherein
    the negative electrode contains a negative electrode active material,
    the negative electrode active material contains a silicon-containing material, and a graphite material,
    a single particle fracture strength of the silicon-containing material is in a range of 50 MPa or more and less than 350 MPa, and
    a ratio Ss/Sg of the single particle fracture strength Ss of the silicon-containing material to a single particle fracture strength Sg of the graphite material is in the range of 2.5 or more and less than 60.

2. The secondary battery according to claim 1, wherein the single particle fracture strength of the graphite material is in a range of 100 MPa or more and less than 350 MPa.

3. The secondary battery according to claim 1, wherein the single particle fracture strength of the silicon-containing material is in a range of 10 MPa or more and 40 MPa or less.

4. The secondary battery according to any one of claims 1 to 3, wherein the silicon-containing material is a composite material including a carbon phase, and silicon phases dispersed in the carbon phase.

5. The secondary battery according to any one of claims 1 to 3, wherein a mass ratio of the silicon-containing material to a total mass of the silicon-containing material and the graphite material in the negative electrode active material is 6 mass% or more and 95 mass% or less.

*FIG. 1*

## INTERNATIONAL SEARCH REPORT

International application No.

**PCT/JP2024/034364**

### A. CLASSIFICATION OF SUBJECT MATTER

***H01M 4/38***(2006.01)i; ***H01M 4/36***(2006.01)i; ***H01M 4/587***(2010.01)i
FI: H01M4/38 Z; H01M4/587; H01M4/36 E; H01M4/36 A

According to International Patent Classification (IPC) or to both national classification and IPC

### B. FIELDS SEARCHED

Minimum documentation searched (classification system followed by classification symbols)

H01M4/38; H01M4/36; H01M4/587

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2019-075199 A (TOYOTA JIDOSHA KABUSHIKI KAISHA) 16 May 2019 (2019-05-16) claims, paragraphs [0035], [0041], [0043]-[0044] | 1-5 |
| A | JP 2021-128841 A (PANASONIC CORPORATION) 02 September 2021 (2021-09-02) claims, paragraphs [0046]-[0050] | 1-5 |
| A | US 2022/0231280 A1 (LG ENERGY SOLUTION, LTD.) 21 July 2022 (2022-07-21) abstract, claims, paragraphs [0062], [0067] | 1-5 |
| A | JP 2015-185407 A (SANYO ELECTRIC CO., LTD.) 22 October 2015 (2015-10-22) claims | 1-5 |
| A | WO 2023/100498 A1 (PANASONIC INTELLECTUAL PROPERTY MANAGEMENT CO., LTD.) 08 June 2023 (2023-06-08) claims, paragraphs [0030], [0034], [0047] | 1-5 |
| A | CN 112234171 A (CENTRAL SOUTH UNIVERSITY) 15 January 2021 (2021-01-15) abstract, paragraphs [0024], [0033]-[0038] | 1-5 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 December 2024** | **10 December 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/034364**

| Patent document cited in search report | | | Publication date (day/month/year) | Patent family member(s) | | | Publication date (day/month/year) |
|---|---|---|---|---|---|---|---|
| JP | 2019-075199 | A | 16 May 2019 | US claims, paragraphs [0044]-[0045], [0053], [0055]-[0057] CN | 2019/0115585 109659498 | A1 A | |
| JP | 2021-128841 | A | 02 September 2021 | US claims, paragraphs [0055]-[0060] CN | 2021/0249662 113258033 | A1 A | |
| US | 2022/0231280 | A1 | 21 July 2022 | WO EP KR CN | 2021/118144 3951945 10-2021-0074187 113795944 | A1 A1 A A | |
| JP | 2015-185407 | A | 22 October 2015 | (Family: none) | | | |
| WO | 2023/100498 | A1 | 08 June 2023 | CN | 118284993 | A | |
| CN | 112234171 | A | 15 January 2021 | (Family: none) | | | |

Form PCT/ISA/210 (patent family annex) (July 2022)

**EP 4 787 475 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015185407 A